# EUROPEAN PATENT APPLICATION

(11) **EP 4 692 732 A1**
(43) Date of publication of application: **11.02.2026**
(21) Application number: 24779690.7
(22) Date of filing: 18.03.2024
(51) Int. Cl.: G01C 21/30, G06Q 10/04

(54) **MINE MANAGEMENT SYSTEM**

(30) Priority: 29.03.2023 JP 2023052680
(71) Applicant: Hitachi Construction Machinery Co., Ltd., Tokyo 110-0015 (JP)
(72) Inventor: IIHOSHI Yoichi, Tokyo 100-8280 (JP); MIZUTANI Kenji, Tokyo 110-0015 (JP); MATSUDA Takuya, Tokyo 110-0015 (JP)
(74) Representative: MERH-IP Matias Erny Reichl Hoffmann Patentanwälte PartG mbB
(86) International application number: PCT/JP2024/010622
(87) International publication number: WO 2024/203565

(57) **Abstract**

For a mesh set A of an unclassified travel path being a travel path that has not yet been classified and a mesh set B of a classified travel path being a travel path that has been classified, a union set of the mesh set A and the mesh set B, a first difference set of the union set and the mesh set A, and a second difference set of the union set and the mesh set B are computed, the unclassified travel path is classified into a path ID of the classified travel path in a case in which the size of the first difference set and the size of the second difference set are both equal to or smaller than a threshold value, and the unclassified travel path is classified into a new path ID in a case in which at least one of the size the first difference set and the size of the second difference set is larger than the threshold value. As a result, the travel path of a mine vehicle is accurately and easily classified.

## Description

### Technical Field

The present invention relates to a mine management system.

### Background Art

In Patent Document 1, there is disclosed a method of comparing position information relating to a plurality of intermediate points of a travel path on which a mine vehicle has traveled with position information relating to a specified path set in advance, thereby identifying a travel path. In Patent Document 2, there is disclosed a method of correcting, after classification of a travel path, position data relating to a dumping place and the like which is basic information for the path classification.

### Prior Art Document

### Patent Documents

Patent Document 1: Japanese Patent No. 5596661
Patent Document 2: Japanese Patent No. 5647362

### Summary of the Invention

### Problem to be Solved by the Invention

There sometimes occurs a case in which a travel path of a mine vehicle measured through the GNSS apparently deviates from a specified path into which the relevant travel path is ideally classified, when data relating to the GNSS includes an error and when the mine vehicle travels while avoiding another vehicle or a rough road, for example. Thus, according to the technology of Patent Document 1, depending on position setting of a comparison point of the specified path to be compared with the intermediate point of the travel path, there is a risk that the travel path is classified into a path different from a path into which the relevant travel path is ideally classified and, consequently, productivity is not evaluated appropriately. Meanwhile, when the number of comparison points is large, a classification accuracy of the path can be increased, as disclosed in Patent Document 2. However, as the number of comparison points is larger, setting of a distance threshold value for each comparison point becomes more complicated, and setting the comparison point while avoiding interference with another specified path becomes more difficult.

Moreover, at a mine site, in practice, there can be a path which is different from the specified path (inclusion), but the whole of which matches a part of the specified path and a path which deviates from the specified path for stopping by a rest location (side trip). For these inclusion and side trip, according to the case of the technologies of Patent Document 1 and Patent Document 2, it is required to add an orientation and a travel distance of a link which connects the comparison points to each other to the condition for the path classification, and hence, the processing for the path classification becomes even complicated. Moreover, in a case in which an evaluation target path does not match any one of the specified paths, it is required to newly set a dumping place, a loading place, and a comparison point in order to newly set a specified path, and to further set a distance threshold value for passage determination for each point.

At the mine site, the dumping place and the loading place are often moved, and hence, with the technologies of Patent Document 1 and Patent Document 2, it is frequently required to update the settings of the dumping place, the loading place, and further the comparison point. This may require labor for the operation of a system.

An object of the present invention is to provide a mine management system capable of accurately and easily classifying a travel path of a mine vehicle.

### Means for Solving the Problem

In order to achieve the object described above, the present invention provides a mine management system including a processing device that has a function of generating, on the basis of position data and operation data relating to a mine vehicle, a mesh set indicated by IDs of meshes obtained by dividing a ground surface at equal intervals for a travel path having, as a start point, a place at which the mine vehicle dumps and, as an end point, a place at which the mine vehicle dumps next and classifying a path ID on the basis of the mesh set, a storage device that stores and accumulates the mesh set and the operation data in association with each other for the travel path generated by the processing device, and a display terminal device that transmits and receives data to and from the processing device and displays received data from the processing device. The processing device is configured to compute, for a mesh set A of an unclassified travel path being a travel path that has not yet been classified and a mesh set B of a classified travel path being a travel path that has been classified, a union set being a logical sum of the mesh set A and the mesh set B, a first difference set being a logical difference between the union set and the mesh set A, and a second difference set being a logical difference between the union set and the mesh set B, classify the unclassified travel path into a path ID of the classified travel path in a case in which a size of the first difference set and a size of the second difference set are both equal to or smaller than a threshold value set for each thereof and record, in the storage device, the path ID in association with the mesh set A relating to the unclassified travel path and the operation data, and newly generate a new path ID in a case in which at least one of the size of the first difference set and the size of the second difference set is larger than the threshold value and record, in the storage device, the new path ID in association with the mesh set A relating to the unclassified travel path and the operation data.

### Advantages of the Invention

According to the present invention, the travel path of the mine vehicle can accurately and easily be classified.

### Brief Description of the Drawings

[Fig. 1] Fig. 1 is a schematic diagram for illustrating a whole image of a mine management system according to the present invention.
[Fig. 2] Fig. 2 is an example of a block diagram relating to a function of recording data relating to a productivity index used by a processing device constituting the mine management system according to a first embodiment of the present invention in association with a path ID.
[Fig. 3] Fig. 3 is an explanatory diagram of a mesh set indicating a travel path in the present invention.
[Fig. 4] Fig. 4 is a Venn diagram for illustrating a basic concept of a determination algorithm for the travel path according to the present invention.
[Fig. 5] Fig. 5 depicts Venn diagrams for illustrating an example of variations of a case in which two travel paths relating to mesh sets A and B are determined as the same path by the processing device constituting the mine management system according to the first embodiment of the present invention and cases in which two travel paths are determined to be different paths.
[Fig. 6] Fig. 6 is a flowchart for illustrating an example of a procedure of path classification of the mine management system according to the first embodiment of the present invention.
[Fig. 7] Fig. 7 is a comparison table between the mine management system according to the first embodiment of the present invention and a mine management system of what is generally called a node-link method.
[Fig. 8] Fig. 8 is an example of a block diagram relating to a function of computing a totalized value of a productivity index for each path by the processing device constituting the mine management system according to the first embodiment of the present invention.
[Fig. 9] Fig. 9 is a flowchart for illustrating an example of a procedure of presenting a recommended control parameter on the basis of a totalization result of the productivity index by the processing device constituting the mine management system according to the first embodiment of the present invention.
[Fig. 10A] Fig. 10A is a view for illustrating an example of a screen for presenting candidates of an evaluation path ID.
[Fig. 10B] Fig. 10B is a view for illustrating an example of a screen for visualizing a mesh set associated with the evaluation path ID.
[Fig. 11A] Fig. 11A is a view of an example of a screen for indicating a travel frequency for each control parameter for a selected evaluation path ID as a bar chart.
[Fig. 11B] Fig. 11B is a view of an example of a screen for indicating comparison in productivity according to the control parameter for the selected evaluation path ID.
[Fig. 11C] Fig. 11C is a view of an example of a screen indicating histograms of travel frequencies for a standard parameter and an alternative parameter for the same productivity index for the selected evaluation path ID.
[Fig. 11D] Fig. 11D is a view of an example of a screen indicating differences in productivity according to the control parameter for a plurality of paths.
[Fig. 12] Fig. 12 is a flowchart for illustrating an example of a procedure of determining a deteriorated vehicle by the processing device constituting the mine management system according to a second embodiment of the present invention.
[Fig. 13A] Fig. 13A is a view for illustrating an example of a screen indicating the productivity for each vehicle ID which has traveled on the selected path ID.
[Fig. 13B] Fig. 13B is a view for illustrating histograms of predetermined operation data in each cycle on an evaluation path.
[Fig. 14] Fig. 14 is a conceptual diagram for describing an omnidirectional mesh used in the mine management system according to a third embodiment of the present invention.
[Fig. 15] Fig. 15 is a schematic diagram for describing an example of path classification through use of the omnidirectional mesh.
[Fig. 16] Fig. 16 is a flowchart for illustrating an example of a procedure of deleting a path ID having a low travel frequency by the processing device constituting the mine management system according to a fourth embodiment of the present invention.

### Modes for Carrying Out the Invention

A description is now given of embodiments of the present invention with reference to drawings.

### (Overview)

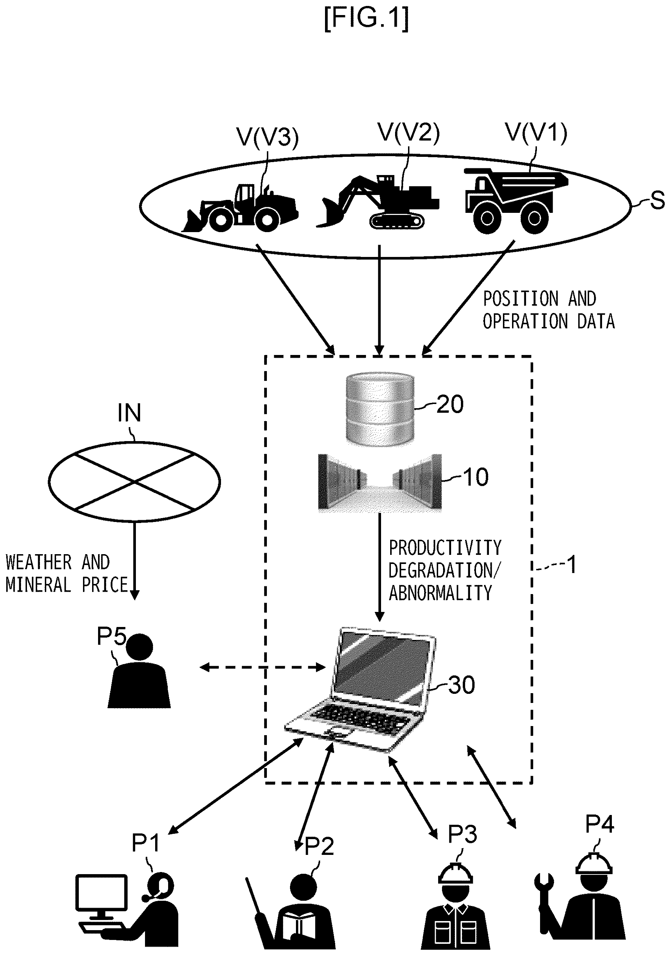

Fig. 1 is a schematic diagram for illustrating a whole image of a mine management system according to the present invention. A mine management system 1 illustrated in Fig. 1 has a function of receiving operation data and position data relating to each mine vehicle V operating at a mine site S and evaluating productivity of the mine site. The mine vehicles V operating at the mine site S includes a plurality of types such as a mine dump V1, a hydraulic excavator V2, and a bulldozer V3. Moreover, at the mine site S, there exists such a case in which there are mine vehicles V which are the same in type (for example, the mine dumps V1) but different in manufacturer, model, manufacturing date, and the like, in a mixed manner. The ground surface on which the mine vehicle V travels varies in inclination and property according to path, and there occur differences in fuel consumption, hill climbing speed, and the like due to the differences in type, manufacturing date, and the like. These differences affect the productivity of the mine site S, and hence, it is important for the mine management system to manage the productivity of the mine site S.

The mine management system illustrated in Fig. 1 includes a processing device 10, a storage device 20, and a display terminal device 30.

The processing device 10 is a computer (for example, a server) located at, for example, the mine site S or a place remote from the mine site S. The processing device 10 is configured to transmit and receive data to and from each mine vehicle V, the storage device 20, and the display terminal device 30. For example, to the processing device 10, log data such as position data and operation data relating to each mine vehicle V received via a network, various types of request data from the display terminal device 30, and the like are input. The position data relating to each mine vehicle V is output of a positioning device (for example, a GNSS mobile station) mounted to each mine vehicle V. The operation data is output of various types of sensors (not illustrated) mounted to the mine vehicle V, for example, output of a gravimeter (for example, a load cell) which measures a load weight and a fuel sensor (for example, a liquid level gauge) which measures a remaining fuel amount of the mine dump V1, and can also include control parameters (described later) applied to vehicle control, for example. The request data is a signal indicating a request for various types of data displays according to an operation on the display terminal device 30. Moreover, the processing device 10 records data in the storage device 20 and reads data from the storage device 20.

In particular, the processing device 10 according to the present embodiment is provided with a function of classifying a travel path of each mine vehicle V at the mine site S for each path ID on the basis of the position data and the operation data relating to each mine vehicle V.

In this specification of the present application, a "travel path" refers to a path traveled in a movement from one dumping place to a next dumping place. That is, a path having, as a start point, one dumping place at which one mine vehicle V dumps a load and, as an end point, a dumping place at which the mine vehicle V dumps for the next time (a place at which a load loaded at a predetermined loading place is dumped after the dumping at the one dumping place) is the travel path. The dumping of the mine vehicle V can be determined on the basis of a change in output of the gravimeter mounted to the mine vehicle V. For example, in a case in which a load weight equal to or more than a set value m1 decreases to a weight equal to or less than a set value m2 (m2 < m1), it is determined that the load is dumped. The travel path of the mine vehicle V is identified from position data successively output from the positioning device mounted to the mine vehicle V.

Moreover, a description "cycle" hereinafter refers to a process executed by the mine vehicle V from the start point to the end point of the travel path, that is, a series of process including the movement from the one dumping place to the loading place, the loading of the load, the movement to the dumping place for the next dumping, and the dumping.

In each embodiment, the travel path of the mine vehicle V is defined as a mesh set indicated by IDs of meshes obtained by dividing a ground surface at equal intervals, that is, a plurality of meshes each at a point of entry as a result of the travel. The mesh set defining the travel path is generated for each mine vehicle V by the processing device 10 on the basis of data received from each positioning device and is classified into any one path ID generated by the processing device 10 and defined at the mine site S or a new path.

Moreover, the processing device 10 is also provided with a function of computing data relating to a productivity index of the mine on the basis of the position data and the operation data relating to each mine vehicle V and a function of determining a deterioration state of a component of each mine vehicle V and whether a control parameter of each mine vehicle V is good or bad.

The "control parameter" is a parameter relating travel control of each mine vehicle V, for example, an idle engine speed, the maximum engine speed, engine response, and the like. For example, in general, the maximum engine speed relates to engine output power. As setting of the maximum engine speed is higher, a hill climbing speed of the mine vehicle V increases, and as the setting of the maximum engine speed is lower, the hill climbing speed of the mine vehicle V decreases. The idle engine speed relates to a timing at which the vehicle speed starts to increase. As setting of the idle engine speed is higher, time required for the mine vehicle V to start to accelerate is shorter, and as setting of the idle engine speed is lower, the time required for the engine speeds to increase to a predetermined engine speed is longer. Moreover, according to setting of the engine response, operation feeling changes. The engine response is adjusted by, for example, a program of an ECU (Engine Control Unit).

As control parameters of the mine vehicle V, in addition to a standard parameter, some other parameters are recorded in advance as specified values in the storage device 20. The mine vehicle V travels at the mine site S through application of any one of the specified values to each control parameter. The control parameter is set to the mine vehicle V by, for example, connecting a predetermined terminal device to a travel controller of the mine vehicle V and operating the connected terminal device to write the predetermined control parameter to the travel controller of the mine vehicle V. In a case in which the travel controller of the mine vehicle V has a function of applying a received control parameter to the travel controller itself, for example, the control parameter set on the display terminal device 30 may be recorded by the processing device 10 in the storage device 20, may simultaneously be transmitted to the mine vehicle V, and may automatically be applied to the mine vehicle V. It is conceivable to individually set the control parameter to each mine vehicle V operating at the mine site S, but a common control parameter may be set to all of the mine vehicles V operating at the mine site S, or, for example, a control parameter different from one path ID to another may be set to each mine vehicle V.

The "productivity index" is an item for determining or evaluating the productivity of the mine site S. A specific example of the productivity index includes a transport amount (T/L) of the load per one litter of the fuel, a transport amount (T/h) per unit time, a fuel consumption amount (L/h) per unit time, and the like of each mine vehicle V. Moreover, a travel distance, travel time, a fuel consumption value, and the like can be exemplified as the productivity indices. Data relating to these productivity indices can be computed as, for example, a value of each mine vehicle V operating at the mine site S during a predetermined period, a total value for all of the mine vehicles V, a value for each path ID, or a total value for all of the path IDs. The value of the productivity index may vary according to the control parameter applied to the mine vehicle V, even in a case in which the same mine vehicle V travels on the same travel path.

For example, when the maximum engine speed of the engine is reduced, the hill climbing speed of the mine vehicle V decreases. Moreover, when the idle engine speed is reduced, the acceleration of the mine vehicle V decreases. In this case, the transport amount (T/h) of the load per unit time decreases, which possibly constitutes one cause for a decrease in productivity. Note that there is such a case that, at the mine site S, a more or less speed difference is absorbed due to, for example, waiting or congestion at the loading place and, depending on the travel path, the setting of the maximum engine speed hardly influences the transport amount of the load per unit time. Meanwhile, when the maximum engine speed or the idle engine speed of the engine is reduced, the fuel consumption amount is suppressed, and the value of a transport amount (T/L) of the load per 1 L of fuel or a fuel consumption amount (L/h) per unit time is possibly improved. In a large mine site S having a large number of operating mine vehicles V, a large difference may be generated in an annual total fuel cost depending on the control parameter applied to each mine vehicle V. It is desired that the control parameter be set in comprehensive consideration of a change in value of each productivity index while perceiving what change in value of each productivity index is predicted as a result of the setting thereof.

The mine management system 1 is a useful system, can estimate how the value of each productivity index changes through the control parameter, and can present, to a user, the variation of each productivity index according to the control parameter and a recommended control parameter. In some cases, the mine management system 1 can be configured to transmit the computed recommended control parameter to the mine vehicle V to apply the control parameter to each mine vehicle V.

Note that it is desired that the operation data and the position data relating to the mine vehicle V be transmitted in real time to the mine management system 1, but the operation data and the position data cannot always successively be transmitted depending on a communication situation and a communication cost at the mine site S. The processing device 10 can be configured to successively process the input operation data and the like in a case in which the operation data and the like can successively be received. However, in a case in which the operation data and the like cannot successively be received, there can be provided such a configuration that a substantial amount of the operation data is buffered and the buffered operation data is then processed. As the substantial amount, for example, a data amount corresponding to the largest amount of time required from the dumping at one dumping place to the dumping at another dumping place on the past travel path may be mentioned.

In the storage device 20 (for example, database), the travel path generated by the processing device 10 is recorded and accumulated in association with the mesh set, the operation data, and the vehicle ID of the mine vehicle V. The position data and the operation data that relate to the mine vehicles V traveling at the same mine site S and that are managed together are aggregated to the storage device 20. The storage device 20 is not required to be a single storage device and may be formed of a plurality of storage devices connected to each other via a network.

The display terminal device 30 is a computer provided with a display device, is typically, for example, a mobile computer such as a note personal computer, a tablet terminal, or a smartphone, transmits and receives data to and from the processing device 10, and displays the data received from the processing device 10. The display terminal device 30 transmits a request signal for desired display to the processing device 10 according to an operation, receives a response of the processing device 10 such as the productivity index relating to the mine site S, the deterioration state of each mine vehicle V, and whether the control parameter of each mine vehicle V is good or not, and displays the response on the display device. The user of the mine management system 1 checks the data displayed on the display terminal device 30 to perceive a decrease or a symptom of the decrease in productivity of the mine site S at an early stage and to execute countermeasures according to a reason for the decrease in productivity, thereby being able to maintain and manage the productivity of the mine site S.

Although, as a display form for the information on the display terminal device 30, various forms such as a report form and a mail form can be employed, a dashboard form is employed in the present embodiment. For example, in a case of an operation administrator P1 at the mine site S, the operation administrator P1 can view an amount of time consumed in each cycle, in dashboard information displayed on the display terminal device 30, and reexamine an operation plan of each mine vehicle V. In a case of an operator trainer P2, the operator trainer P2 can find out, from the dashboard information, a premature operator who has, for example, a high frequency of sudden start and a sudden braking, and provide operation training. In a case of a road surface maintenance person P3, the road surface maintenance person P3 can find out at an early stage, from the dashboard information, a place of a possible rough road surface leading to the productivity decrease and the like and execute repair. In a case of an equipment maintenance person P4, the equipment maintenance person P4 can use the dashboard information for early determination of deterioration and a failure of mounted equipment of the mine vehicle V, execution of swift repair, calibration of the control parameter for improving fuel consumption of the mine vehicle V depending on the travel path, and the like. Moreover, in a case of a person in charge of excavation P5, the person in charge of excavation P5 can check the dashboard information together with weather information (history and/or prediction) and a mineral price (history and/or prediction) acquired via the Internet IN and correct an excavation plan and a maintenance plan. Moreover, the person in charge of excavation P5 can instruct the operation administrator P1, the operator trainer P2, the road surface maintenance person P3, and the equipment maintenance person P4 to take prevention measures against the productivity decrease on the basis of a check result of the dashboard information and the like.

### [First Embodiment]

### - Function for Path Classification/Productivity Index Computation -

In a first embodiment, a description is given of a system which notifies the equipment maintenance person P4 of the control parameter which improves the productivity of the mine site S.

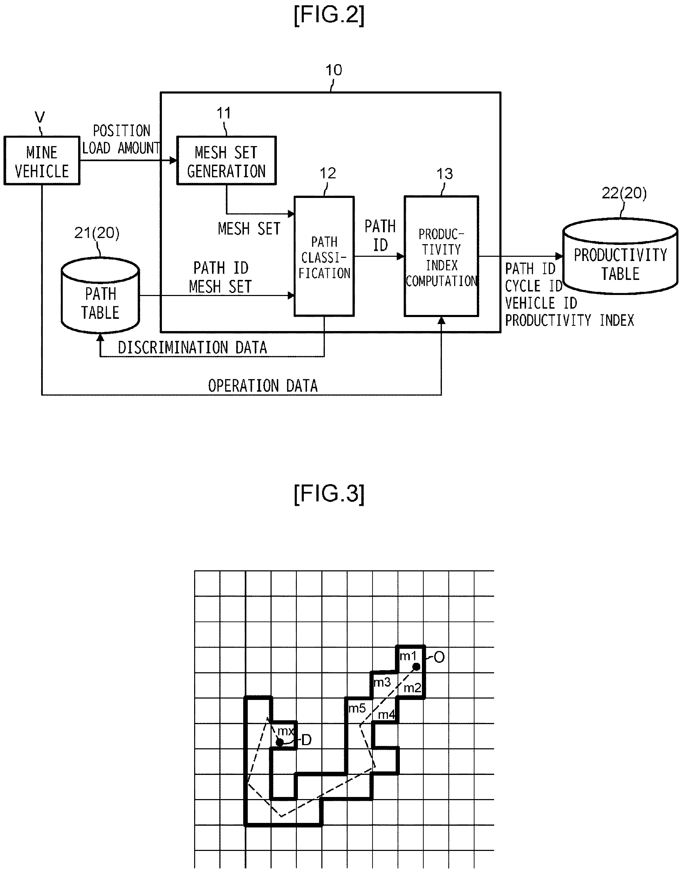

Fig. 2 is an example of a block diagram of the processing device 10 relating to a function of recording the productivity index in association with the path ID. In Fig. 2, a function of path classification and productivity index computation of the processing device 10 is indicated as blocks 11 to 13.

In the block 11, the processing device 10 generates the mesh set for the travel path of each mine vehicle V traveling at the mine site S, on the basis of such data as the position and a load amount obtained by the positioning device, the gravimeter, and the like mounted to the mine vehicle V. The mesh set is generated each time the certain amount of data is buffered, as described above in the present embodiment. The travel path for which the mesh set is generated in the block 11 has a path ID which has not yet been classified, and is hereinafter referred to as an "unclassified travel path."

In the block 12, the processing device 10 compares the generated mesh set with a mesh set associated with each path ID registered to a database 21 serving as the path table and classifies the unclassified travel path. An algorithm for the classification for the unclassified travel path is described later.

The database 21 is the storage device 20 or a part of a storage area thereof. In the database 21, data relating to the mesh set is stored for each path ID in a data structure, for example, in a table form. The travel path relating to the path ID recorded in the database 21 is a known path which has been classified, and is hereinafter referred to as a "classified travel path."

In the block 12, in a case in which it is determined that the unclassified travel path corresponds to any one of the path IDs already recorded in the database 21, the path ID of the corresponding classified travel path is output. Meanwhile, in the block 12, in a case in which it is determined that the unclassified travel path corresponds to none of the existing path IDs, a new path ID is output, and the mesh set of the unclassified travel path is recorded in the database 21 in association with the new path ID.

In the block 13, the processing device 10 generates a value of the productivity index (for example, the transport amount (T/L) or the transport amount (T/h)) of the mine and the cycle ID on the basis of pieces of operation data (fuel consumption amount, the load transport amount, the travel distance, the cycle start time, the cycle end time, and the like) relating to the mine vehicle V relating to the classified travel path. The "cycle ID" is an ID added each time the mine vehicle V executes the cycle. For example, the path ID having a higher travel frequency has larger number of associated cycle IDs and hence has a larger number of pieces of data. The data relating to the productivity index and the cycle ID which are generated here are associated with the path ID together with the vehicle ID and the control parameters applied to the mine vehicle V and are recorded in a database 22 serving as the productivity table.

The database 22 is the storage device 20 or a part of the storage area thereof. In the database 22, data relating to the productivity index, the cycle ID, the vehicle ID, and the control parameters are stored for each path ID in a data structure, for example, in a table form. For example, data relating to the productivity index of each mine vehicle V can be evaluated for each path ID in a predetermined period on the basis of the database 22, and hence, it is possible to determine the vehicle (deteriorated vehicle) reduced in the energy efficiency and whether or not the adjustment of the control parameter is required, according to whether value of the productivity index for the same path ID is high or low.

### - Travel Path -

Fig. 3 is an explanatory diagram of the mesh set indicating the travel path in the present invention. In the example of Fig. 3, there is schematically illustrated a movement path from a dumping place O being a start position (start point) of the cycle to a next dumping place D being an end position (end point) of the cycle. The shape of each mesh here is a square (for example, quadkey), but, as the shape of the mesh, for example, a hexagon (honeycomb) and a rectangular (GeoHash) can be employed as long as the whole mine can be covered by the same shape. Moreover, the sizes in a horizontal direction and a vertical direction (a latitude direction and a longitude direction) of the mesh are set such that the one entire mine vehicle V is accommodated and the sizes are longer than a movement distance in one cycle of the sampling of the positioning device at the maximum speed of the mine vehicle V. In a case of the square, the size of the mesh corresponds to, for example, a ground surface of 30 m × 30 m.

In Fig. 3, meshes through which the mine vehicle V passes in the movement from the dumping place O to the dumping place D is indicated by enclosing with thick lines. A set (m1, m2, ..., mx) of the plurality of mesh IDs enclosed by thick lines is a mesh set indicating the travel path of the mine vehicle V. The travel path of the mine vehicle V is measured by, for example, the positioning device installed on the mine vehicle V, and the mesh set is generated by collecting the mesh IDs of the meshes through which the mine vehicle V passes. Through use of this mesh set, complicated setting of intermediate points and determination through use of a distance threshold value are not necessary, and further, the path classification can simply be implemented through use of set computation described later.

### - Basic Concept of Path Determination -

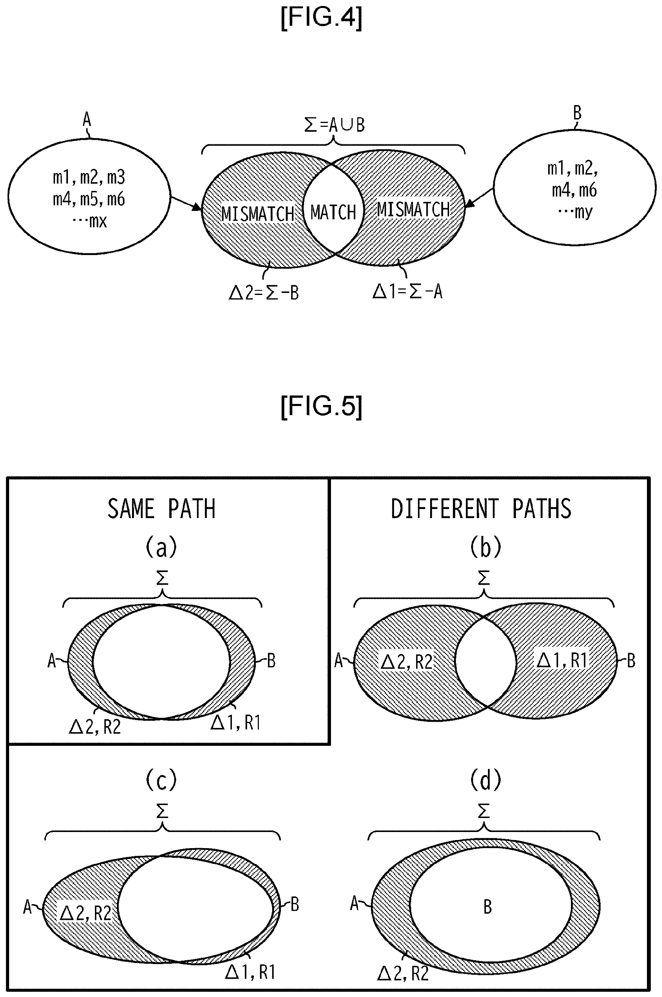

Fig. 4 is a Venn diagram for illustrating a basic concept of the determination algorithm for the travel path according to the present invention. There is considered a case in which a mesh set A of a first travel path is indicated as a set of mesh IDs (m1, m2, m3, m4, m5, m6, ..., mx) and a mesh set B of a second travel path is indicated as a set of mesh IDs (m1, m2, m4, m6, ..., my). In this case, a union set Σ (= AUB) being a logical sum of the mesh sets A and B, a first difference set Δ1 (= Σ-A) being a logical difference between the union set Σ and the mesh set A, and a second difference set Δ2 (= Σ-B) being a logical difference between the union set Σ and the mesh set B are obtained. The size of the first difference set Δ1 corresponds to a mismatch degree of the second travel path to the first travel path, and the size of the second difference set Δ2 corresponds to a mismatch degree of the first travel path to the second travel path.

In the present embodiment, it is determined whether the first travel path and the second travel path are the same path or different paths, by comparing the sizes of the first difference set Δ1 and the second difference set Δ2 with threshold values S1 and S2 set thereto, respectively. That is, in the case in which it is determined whether or not the first travel path matches the second travel path, not the size of a matching area of the two travel paths but the size of a mismatching area of the two travel paths is evaluated, thereby determining whether or not both of the travel paths can be considered as the same. The mismatch degree is not limited to the sizes of the first difference set Δ1 and the second difference set Δ2 per se, and may be evaluated after conversion to, for example, ratios R1 and R2 (R1 = Δ1/Σ and R2 = Δ2/Σ) of the first difference set Δ1 and the second difference set Δ2 to the union set Σ.

Note that the size of the set is, for example, the number of meshes forming the set and that the sizes of the first difference set Δ1 and the second difference set Δ2 correspond to the numbers of meshes forming these difference sets.

### - Variations of Path Determination -

Fig. 5 depicts Venn diagrams for illustrating an example of variations of a case in which the two travel paths relating to the mesh sets A and B described in Fig. 4 are determined as the same path by the processing device 10 and cases in which two travel paths are determined as different paths. The processing device 10 determines that the two travel paths relating to the mesh sets A and B are the same path, in a case in which the sizes (the ratios R1 and R2 in this example) of the first difference set Δ1 and the second difference set Δ2 are equal to or smaller than the threshold values S1 and S2, respectively, set in advance. Meanwhile, the processing device 10 determines that the two travel paths relating to the mesh sets A and B are different paths, in a case in which at least one of the sizes (the ratios R1 and R2) of the first difference set Δ1 and the second difference set Δ2 is larger than a corresponding one of the threshold values S1 and S2. The threshold value S1 for the ratio R1 and the threshold value S2 for the ratio R2 may be set values different from each other, but, in the present embodiment, a common value (for example, 0.2) is set.

Through this determination algorithm, the processing device 10 determines that the two travel paths relating to the mesh sets A and B are the same paths, in a case in which the ratio R1 is equal to or lower than the threshold value S1 and the ratio R2 is equal to or lower than the threshold value S2 as a variation "a" of Fig. 5. In the other case, that is, in a case in which at least one of the ratios R1 and R2 is larger than the corresponding threshold value, the processing device 10 determines that the two travel paths relating to the mesh sets A and B are different paths. As variations in which at least one of the ratios R1 and R2 is higher than the corresponding threshold value, variations "b," "c," and "d" are exemplified in Fig. 5.

The variation "b" of Fig. 5 is a case in which the ratio R1 is higher than the threshold value S1 and the ratio R2 is higher than the threshold value S2, and a case in which the two travel paths do not match each other even partially and are completely different paths and a case in which the two travel paths partially match each other but are different from each other in at least one of the dumping place and the loading place can correspond to the variation "b." The case of completely different paths corresponds to a Venn diagram in which Δ1 = B and Δ2 = A.

The variation "c" is a case in which any one of the ratios R1 and R2 is higher than the corresponding one of the threshold values S1 and S2 and the other one of the ratios R1 and R2 is equal to or lower than the corresponding one of the threshold values S1 and S2. A case in which one travel path matches the other travel path to a certain degree but the other travel path is greatly deviates from the one travel path corresponds to the variation "c." For example, in a case in which the two travel paths are planned to have the same path with the same start point and end point but, on one travel path, the mine vehicle V deviates from the planned path for such a reason as rest (a side trip occurs), the mesh sets A and B may form the Venn diagram illustrated in the variation "c." It is sometimes desired that the travel path of the mesh set A indicated in the variation "c" be distinguished as an exception as the data used to evaluate the productivity of the travel path relating to the mesh set B.

The variation "d" is a case in which any one of the ratios R1 and R2 is zero and the other one of the ratios R1 and R2 is higher than the corresponding threshold value. A case in which entire one travel path matches a part of the other travel path (in a case in which one travel path is included in the other travel path) corresponds to the variation "d." As an example of this inclusion, there can be mentioned a case in which all of the two dumping places and the loading place of the one travel path exist on the other travel path and at least one of the two dumping places of the one travel path exists in an intermediate portion of the other travel path. The travel paths of the mesh sets A and B indicated in the variation "c" are different paths, and it is desired that the travel paths be distinguished from each other.

### - Path Classification Procedure -

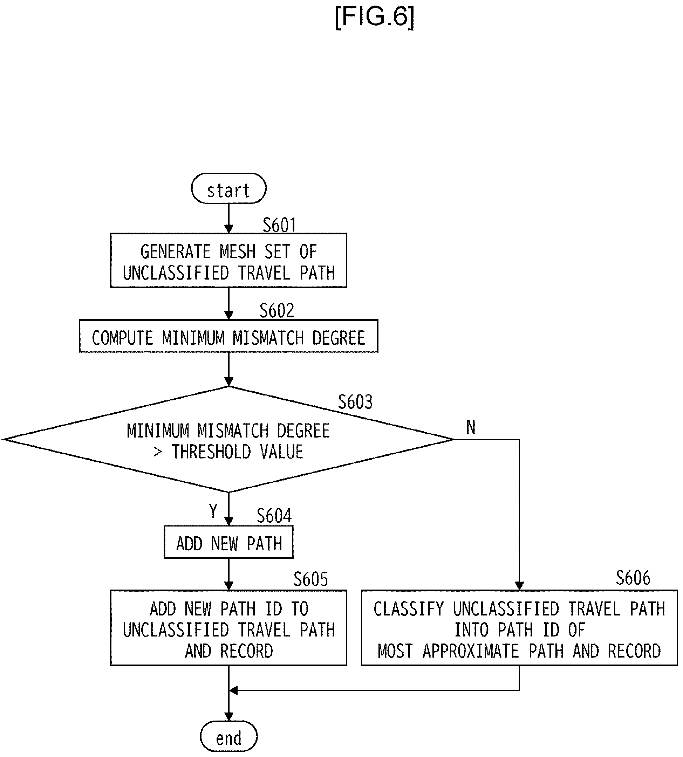

Fig. 6 is a flowchart for illustrating an example of a procedure of the path classification of the mine management system 1 according to the present embodiment.

The processing device 10 classifies, on the basis of the position data and the operation data acquired by each mine vehicle V each time each mine vehicle V travels at the mine site S, the path of the unclassified travel path relating to these pieces of new data and records the path in the storage device 20. The processing device 10 considers that the mesh set A described in Fig. 4 is the mesh set of the unclassified travel path and that the mesh set B is the mesh set of the classified travel path recorded in the storage device 20, and determines whether the unclassified travel path is the same path as the classified travel path or a new path which corresponds to none of the classified travel paths.

The processing device 10 receives the position data and the operation data relating to each mine vehicle V at any time and automatically executes the processing of the flowchart of Fig. 6 each time certain amounts of these pieces of data are buffered.

### Step S601

When a certain amount of the mesh IDs of the passed meshes are buffered for a new unclassified travel path, the processing device 10 starts the processing of Fig. 6 and generates the mesh set A of the unclassified travel path.

### Step S602

After generating the mesh set A, the processing device 10 computes, for the mesh set A of the unclassified travel path and the mesh set B of the classified travel path (cycle ID), the union set Σ, the first difference set Δ1, and the second difference set Δ2 described above. In the present embodiment, it is assumed that, as a value for evaluating a mismatch degree between the unclassified travel path relating to the mesh set A and the classified travel path relating to each mesh set B, the ratios R1 and R2 described above are further computed for each mesh set B.

In a case in which there exist a plurality of classified travel paths (cycle IDs), the mesh set B of each of the classified cycle IDs is compared with the mesh set A, and the union set Σ, the first difference set Δ1, and the second difference set Δ2 are each computed. Note that, in a case in which there exist a large number (for example, equal to or more than a set number set in advance) of classified travel paths, the processing load on the processing device 10 may become excessive. In this case, classified travel paths in number defined in advance (for example, the set number described above) or in number obtained by multiplying the total number of classified travel paths by a coefficient (for example, 0.2) defined in advance may be extracted, and the union set Σ, the first difference set Δ1, and the second difference set Δ2 may each be computed for each of the mesh sets B of the extracted classified travel paths.

After that, the minimum value of the mismatch degrees each between the mesh sets A and B is identified. In this case, for example, a mesh set B having the smallest average value (or a weighted average value) or total value of the ratios R1 and R2 (or Δ1 or Δ2) can be identified, and the mismatch degree relating to the identified mesh set B can be identified as the minimum mismatch degree. In a case in which the number of classified travel paths is only one, the mismatch degree relating to this classified travel path is necessarily the minimum mismatch degree.

### Step S603

When the minimum mismatch degree is computed, the processing device 10 determines whether the unclassified travel path is a path different from or the same path as the classified travel path (cycle ID) relating to the minimum mismatch degree, according to whether or not the minimum mismatch degree is higher than a threshold value set in advance or equal to or lower than the threshold value. Specifically, as described in Fig. 4 and Fig. 5, in the case in which the first difference set Δ1 and the second difference set Δ2 (in this example, the ratios R1 and R2) are both equal to or lower than the threshold values S1 and S2 (for example, 0.2), respectively, the processing device 10 determines that the mismatch degree is equal to or lower than the threshold value (N) and that the unclassified travel path and the classified travel path relating to the minimum mismatch degree are the same path. In this case, the procedure transitions from Step S603 to Step S606. Meanwhile, in the case in which at least one of the first difference set Δ1 and the second difference set Δ2 (in this example, the ratios R1 and R2) is higher than the corresponding threshold values S1 or S2, the processing device 10 determines that the mismatch degree is higher than the threshold value (Y) and that the unclassified travel path and the classified travel path relating to the minimum mismatch degree are different paths. In this case, the procedure transitions from Step S603 to Step S604.

### Step S604

In a case in which the minimum mismatch degree is higher than the threshold value, the processing device 10 adds, as the new path, the unclassified travel path relating to the mesh set A generated in Step S601, and records the path in the database 21 of the storage device 20.

### Step S605

When the processing device 10 adds the unclassified travel path as the new path, the processing device 10 generates the new path ID for classifying the added new path, records this new path ID in the storage device 20 in association with the mesh set A relating to this unclassified travel path, the operation data acquired on this unclassified travel path, the data relating to the productivity index computed from the operation data, and the vehicle ID of the mine vehicle V which has traveled on this unclassified travel path, temporarily ends the processing of Fig. 6, and waits until the next processing starts.

### Step S606

In a case in which the minimum mismatch degree is equal to or lower than the threshold value, the processing device 10 classifies this unclassified travel path into the same path ID of the classified travel path (cycle ID) relating to the minimum mismatch degree, records, in the storage device 20, the classified path ID in association with the mesh set A, the operation data, the productivity index, and the vehicle ID, temporarily ends the processing in Fig. 6, and waits until the next processing start.

### - Comparison with Related-Art Method -

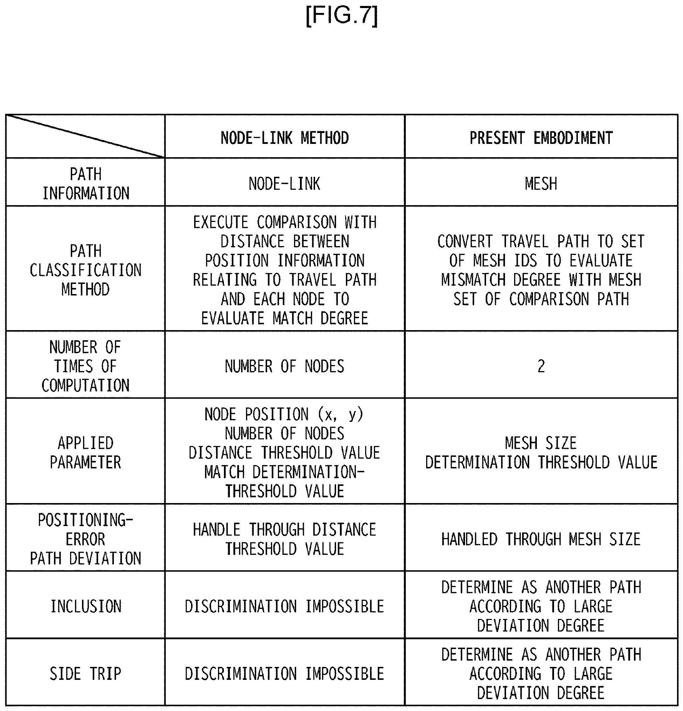

Fig. 7 is a comparison table between a mine management system of what is generally called a node-link method and the mine management system 1 according to the present embodiment. In what is generally called the node-link method, the travel path of the mine vehicle is represented as nodes and links. When a distance between the travel position information relating to the mine vehicle and a node of the existing path is shorter than a distance threshold value, the mine vehicle is determined to have passed this node. When the number of nodes determined to have passed in this way is larger than a match determination threshold value, the travel path of the mine vehicle is determined to be the same path as the existing path. However, processing required for this determination is complicated, and a required number of times of distance computation of the position information is at least the number of nodes to be compared. Moreover, parameters required to set the existing path are the position of each node, the number of nodes, the distance threshold value, and the match determination threshold, which means the number of required parameters is large, and unless these parameters are appropriately set, the path determination possibly fails. Moreover, the positioning error and a deviation of the travel path of the mine vehicle can be handled through adjustment of the distance threshold value, but the inclusion and the side trip described above cannot be discriminated, and it is required to add a further discrimination condition for the discrimination.

Meanwhile, in the present embodiment, the position data relating to the travel path is converted to the mesh set (set of the mesh IDs), and the mismatch degree between the mesh set of the unclassified travel path and the mesh set of the classified travel path is evaluated, thereby solving the problem of the node-link method. Specifically, the computation required for the path classification is only the two pieces of computation being the computation of the mismatch degree (the first difference set Δ1 or the ratio R1) of the mesh set B of the classified travel path to the union set Σ and the computation of the mismatch degree (the second difference set Δ2 or the ratio R2) of the mesh set A of the unclassified travel path to the union set Σ. Moreover, the parameters applied to the path classification are only the mesh size of the mesh and the threshold values S1 and S2 for evaluating the mismatch degree. Variations in the road surface state and an operation technique, an avoidance operation for a rough road and another vehicle and the like, and a deviation of the travel path due to a positioning error of the GNSS can also easily be handled by adjusting the mesh size. Further, with the path classification algorithm in the present embodiment, it is also possible to evaluate the mismatch degree between the paths, thereby discriminating also the inclusion and the side trip as paths other than the classified path as described above.

For example, in a case in which the unclassified travel path is a path accompanied by a "side trip," the unclassified travel path has the same start point and end point as those of the classified travel path, but deviates from the classified path in an intermediate portion of the path. In the case of the side trip, the mesh sets A and B of the unclassified travel path and the classified travel path have the relation as the Venn diagram illustrated in the variation "c" of Fig. 5. Hence, the second difference set Δ2 (or the ratio R2) is higher than the threshold value S2, and the first difference set Δ1 (or the ratio R1) is equal to or lower than the threshold value S1. In this case, the first difference set Δ1 (or the ratio R1) is equal to or lower than the threshold value S1, but the second difference set Δ2 (or the ratio R2) is higher than the threshold value S2, and hence, the two travel paths relating to the mesh sets A and B are distinguished from each other as different paths by the processing device 10. According to necessity, not only the travel paths are distinguished from each other as the different paths, but also the fact that the travel path includes the "side trip" may be recorded as additional information relating to the cycle ID.

Moreover, in the case in which the unclassified travel path is a path "included" in another travel path, the entire unclassified travel path matches a part of the classified path. In the case of the inclusion, the mesh sets A and B of the unclassified travel path and the classified travel path have the relation as the Venn diagram illustrated in the variation "d" of Fig. 5. Hence, the first difference set Δ1 (or the ratio R1) is zero, and the second difference set Δ2 (or the ratio R2) is higher than the threshold value S2. In this case, the first difference set Δ1 (or the ratio R1) is equal to or lower than the threshold value S1, but the second difference set Δ2 (or the ratio R2) is higher than the threshold value S2, and hence, the two travel paths relating to the mesh sets A and B are distinguished from each other as different paths by the processing device 10. According to necessity, not only the travel paths are distinguished from each other as the different paths, but also the fact that the travel path is the "included" travel path may be recorded as additional information relating to the cycle ID.

### - Totalization Function for Productivity Index -

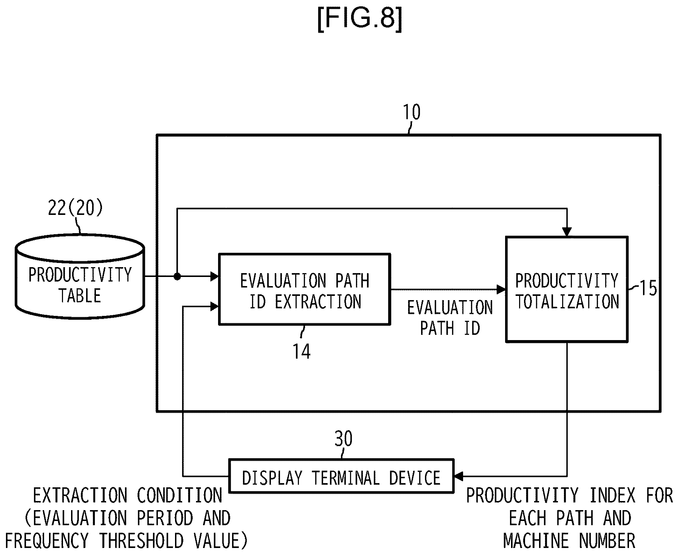

As described above, in the storage device 20 (database 22), for each travel path (cycle ID), the control parameters (the idle engine speed, the maximum engine speed, and the engine response) applied to the travel control for the mine vehicle V are recorded. The processing device 10 refers to the data relating to a plurality of classified travel paths (cycle IDs) having the same path ID in the storage device 20 to generate, for each control parameter, analysis data relating to the productivity index computed on the basis of the operation data relating to each cycle ID, and outputs the analysis data for each control parameter to the display terminal device 30. On this occasion, the productivity of the path ID having a higher travel frequency has larger influence on the productivity of the entire mine site S. Thus, it is preferred that the processing device 10 weight the operation data according to the number of pieces of data (travel frequency) relating to the path ID and perform weighted averaging on the totalized data to compute the analysis data. With reference to Fig. 8, a description is now given of an example of this processing.

Fig. 8 is an example of a block diagram of the processing device 10 relating to the function of totalizing the value of productivity indices for each path. In Fig. 8, the totalizing function for the productivity index of the processing device 10 is indicated as blocks 14 to 15.

In the block 14, the processing device 10 refers to the data relating to all (or a number equal to or larger than a set number) of the classified travel paths (cycle IDs) accumulated in the database 22 in an evaluation period set by the user on, for example, the display terminal device 30, and extracts, as the evaluation path ID, the path ID having a travel frequency higher than a frequency threshold value set in advance (that is, having the number of pieces of data in the evaluation period than a predetermined number), in the evaluation period.

In the block 15, the processing device 10 reads, from the database 22, each data relating to the productivity index of each cycle ID of the extracted evaluation path ID and totalizes the pieces of data relating to the productivity index for each evaluation path ID.

Note that the frequency threshold value used in the processing of the block 14 is, for example, a value set on the display terminal device 30 by the user and is a condition provided to reduce a variation in a computation result of the productivity index caused by, for example, the operation technique of an operator of the mine vehicle V and other conditions (for example, wait time for cooperation with another vehicle, an excavator, or the like). Thus, it is preferred that the frequency threshold value be set in such a manner as to extract a path ID having such a number of pieces of data that influence on the totalization result is equal to or less than a certain level even when the extracted path ID includes several peculiar cycles (cycles greatly influenced by the waiting and the congestion at the loading place). By evaluating the path ID having a particularly high travel frequency, it is possible to easily know a tendency of the productivity evaluation of the entire mine site S.

### - Evaluation Procedure of Control Parameters -

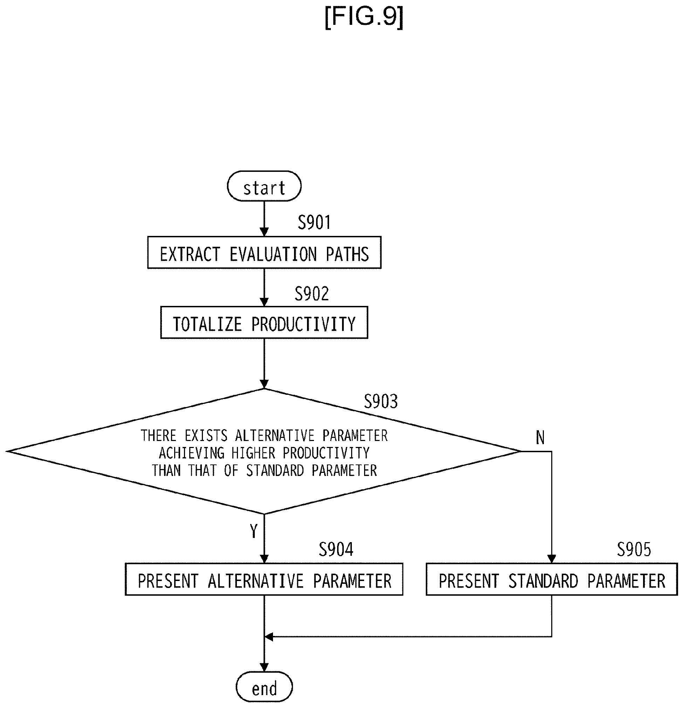

Fig. 9 is a flowchart for illustrating an example of a procedure of presenting a recommended control parameter on the basis of the totalization result of the productivity index.

When the processing device 10 receives, from the display terminal device 30, a request signal corresponding to an operation performed by the user, for the comparison in the productivity according to the control parameters, the processing device 10 executes processing of the flowchart of Fig. 9.

### Step S901

When receiving the request signal from the display terminal device 30, the processing device 10 selects the evaluation paths in the evaluation period set by the user and transmits the evaluation paths to the display terminal device 30. For example, the processing device 10 computes the travel frequency of each path ID in the evaluation period, arranges the path IDs in a descending order of the travel frequency, and causes the display terminal device 30 to display, as candidates of the evaluation path ID, these path IDs in a bar chart form together with the frequency threshold value. The selected path IDs may be displayed as a Pareto chart.

### Step S902

When the (one or plurality of) evaluation path ID (IDs) is (are) selected from the displayed candidates in the display terminal device 30, the processing device 10 totalizes the pieces of data relating to the productivity index for each control parameter for the evaluation path ID transmitted from the display terminal device 30, further performs weighted averaging according to the travel frequency of each path ID, and generates the analysis data. For example, the analysis data for the standard parameter and other alternative parameters (a parameter α, a parameter β, ...) is computed for each of the maximum engine speed, the idle engine speed, and the engine response of the engine. In a case in which a plurality of evaluation path IDs are specified, the analysis data is computed for each evaluation path ID in the same manner.

### Step S903

After computing the analysis data relating to the productivity index for each control parameter for the evaluation path ID, the processing device 10 compares the value of the productivity indices among the control parameters, thereby identifying the most excellent control parameter in the value of the productivity index. As an identification method, there can be employed, in addition to an identification method of comparing the value of the productivity index specified on the display terminal device 30, an identification method of determining priorities for the productivity indices and then comparing value of productivity index having high priority, for example. As a result, in a case in which there exists an alternative parameter which achieves higher productivity than that of the standard parameter (Y), the processing device 10 causes the procedure to transition from Step S903 to Step S904, and in a case in which there does not exist such an alternative parameter (N), the processing device 10 causes the procedure to transition from Step S903 to Step S905.

### Step S904

In a case in which there exist alternative parameters each of which achieves higher productivity than that of the standard parameter, the processing device 10 indicates that the alternative parameter (for example, the parameter α) which achieves the highest productivity is the recommended parameter, transmits comparison data relating to the values of the productivity index for each parameter to the display terminal device 30, causes the comparison data to be displayed as the dashboard information, and ends the processing of the flowchart of Fig. 9.

### Step S905

In a case in which there does not exist an alternative parameter which achieves higher productivity than that of the standard parameter, the processing device 10 indicates that the standard parameter is the recommended parameter, transmits the comparison data relating to the values of the productivity index for each parameter to the display terminal device 30, causes the comparison data to be displayed as the dashboard information, and ends the processing of the flowchart of Fig. 9.

Note that, in Fig. 9, it is assumed that the recommended parameter is presented to the user (for example, the equipment maintenance person P4) and the user gets on each mine vehicle V and sets the recommended parameter in a case in which the control parameter is to be changed, but in a case in which the control parameter of the mine vehicle V can remotely be changed, the data relating to the recommended parameter may be transmitted from the processing device 10 to each mine vehicle V, and the control parameter of the mine vehicle V may be changed without intervention of the manual work of the user. Moreover, instead of uniformly setting the control parameter of all of the vehicles operating at the mine site S, the recommended parameter may be determined through the processing of Fig. 9 for each path ID, and the control parameters different from one path ID to another may be set to the mine vehicles V, for example.

### - Example of Display -

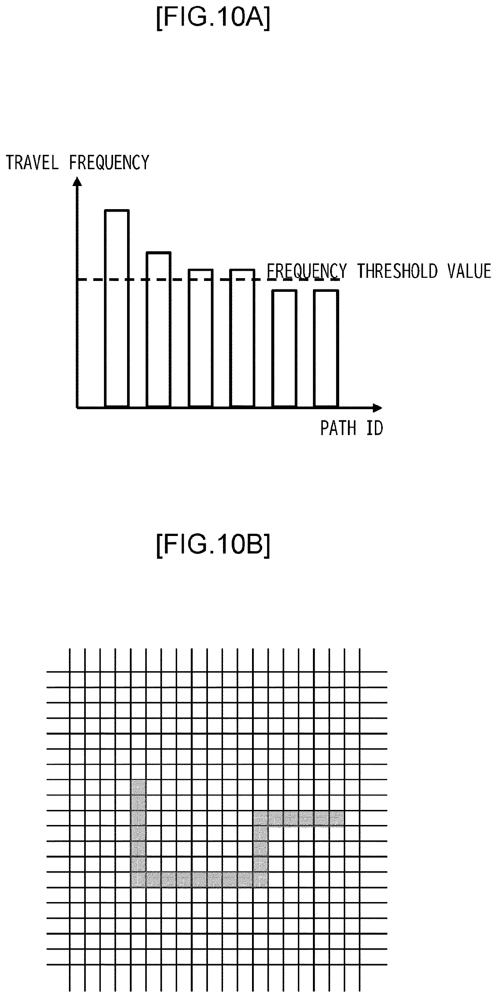

In Fig. 10A and Fig. 10B, there are illustrated examples of selection screens for the evaluation path caused to be displayed by the processing device 10 on the display terminal device 30.

Fig. 10A is a view for illustrating an example of a screen for presenting candidates of the evaluation path ID. The screen of Fig. 10A is displayed on the display terminal device 30 in the procedure in, for example, Step S901 of Fig. 9. In Fig. 10A, there is illustrated such an example that a bar chart in which the path IDs are arranged in a descending order of the travel frequency in the evaluation period from the left is displayed together with a frequency threshold value. Note that the bar chart is exemplified in Fig. 10A, but the candidates may be displayed as a Pareto chart.

With this display, the user can recognize, at a glance, the number of appropriate path IDs as the candidates of the evaluation path ID. In the example of Fig. 10A, four path IDs exceed the frequency threshold value and hence have sufficient number of pieces of data. Moreover, by considering a degree of a margin to the frequency threshold value, for example, it is possible to estimate whether or not influence on the evaluation of the productivity is small, even when abnormal values are mixed more or less. In the example of Fig. 10A, the left most path ID among the four path IDs exceeding the frequency threshold value has a large margin to the frequency threshold value compared with the other three path IDs and hence is estimated to be least influenced by substantially the same number of abnormal values.

Fig. 10B is a view for illustrating an example of a screen for visualizing a mesh set associated with the evaluation path ID. On the screen of Fig. 10B, a trajectory of the path ID selected, for example, in Fig. 10A is displayed as meshes. Through superimposition on a map of the mine site S or a satellite photograph, which is not particularly illustrated, the user can recognize the position of the travel path at the mine site S at a glance, which is convenient as a reference in a case in which the control parameter is examined for another path ID close in the positional relation (for example, path IDs different in loading place but common in dumping place).

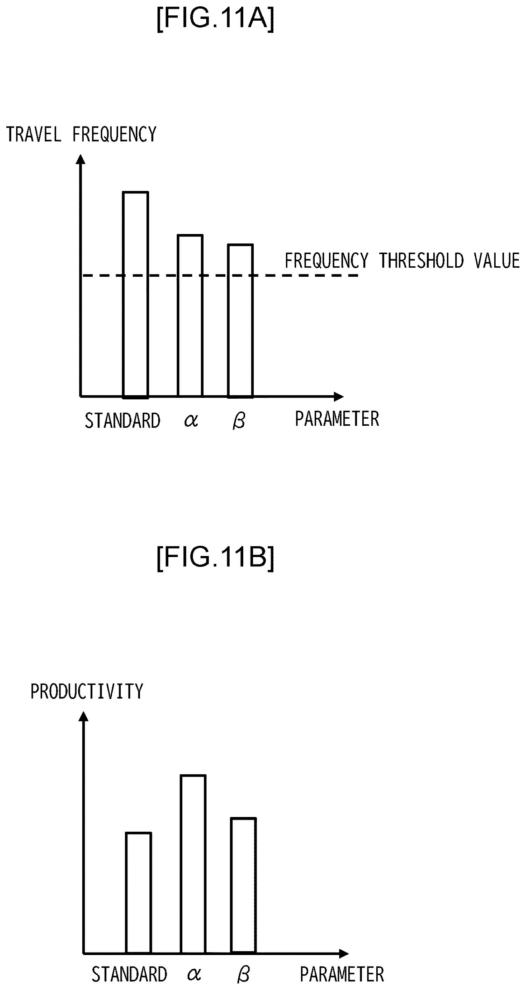

In Fig. 11A to Fig. 11D, there are illustrated examples of display screens of the analysis data displayed by the processing device 10 on the display terminal device 30.

Fig. 11A is an example of a screen on which the travel frequency for each control parameter on the selected evaluation path ID is indicated as a bar chart. In Fig. 11A, there is illustrated such an example that a bar chart in which the travel frequencies, that is, the numbers of cycle IDs each for each control parameter in the evaluation period, are arranged in a descending order from the left is displayed together with a frequency threshold value (which may be a value different from the frequency threshold value of Fig. 10A) on the basis the data relating to each cycle ID of the selected evaluation path ID. With this display, the user can recognize, at a glance, the control parameter which has a sufficient number of pieces of data and hence is significant for comparison.

Fig. 11B is a view of an example of a screen for indicating comparison in the productivity according to the control parameter for the selected evaluation path ID. The value corresponding to each control parameter illustrated in Fig. 11B is a representative value (for example, the average value or the median) of the pieces of data which relate to the cycle IDs and are to be totalized. For example, when it is assumed that the productivity index indicated in Fig. 11B is a transport amount (T/L) of the load per one litter of the fuel, it can be recognized that a large amount of load can be transported with the same fuel consumption for the evaluation path ID when the alternative parameter (particularly, the parameter α) is set as the control parameter, compared to a case in which the standard parameter is set as the control parameter. This display is not limited to the transport amount (T/L) of the load per one liter of the fuel, and can be executed for the transport amount (T/h) per unit time. Moreover, for the same evaluation path ID, the comparison among a plurality of productivity indices according to the control parameter may be arranged side by side for viewing on one screen.

In the case of the example of Fig. 11B, it is appreciated that the parameter α is recommended for the transport amount (T/L) of the load per one liter of the fuel, and it can be recognized, by checking, also for another productivity index, whether the parameter α is recommended for any productivity index for the evaluation path ID or the control parameter to be recommended varies according to the productivity index.

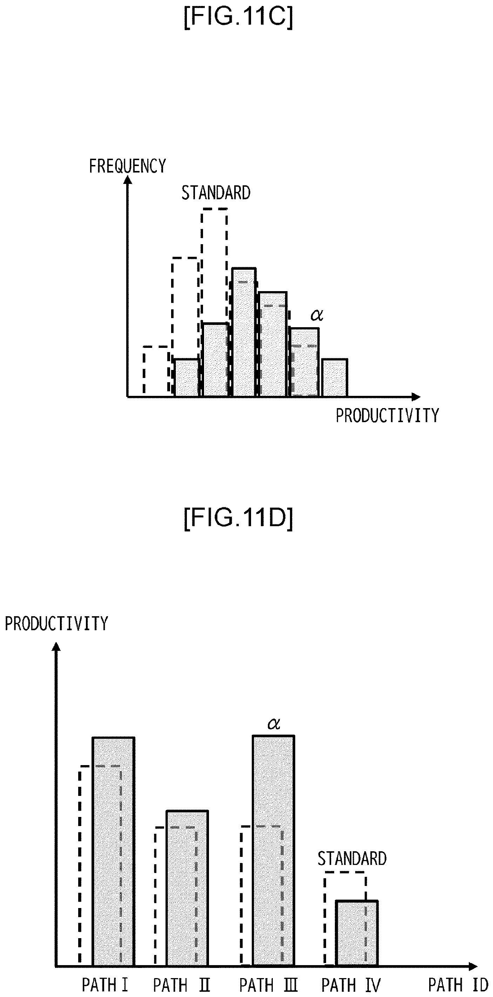

Fig. 11C is a view of an example of a screen indicating histograms of the travel frequencies (the number of cycle IDs) for the standard parameter and the parameter α for the same productivity index for the selected evaluation path ID. A histogram indicated as dotted lines is data relating to the standard parameter, and a histogram indicated as solid lines is data relating to the parameter α. The horizontal axis of Fig. 11C is the specified productivity index, for example, the transport amount (T/L) of the load per one liter of the fuel. In the example of Fig. 11C, the data relating to the standard parameter and the data relating to the alternative parameter are both close to the normal distribution and have small variations, so that the abnormal values are estimated to have a small influence on them. If a certain number of pieces of data extremely low in the transport amount (T/L) is observed for the standard parameter in Fig. 11C, it can be recognized that, even if the standard parameter is seemed to be inappropriate in Fig. 11B, the cause therefor is possibly the irregular data, and hence, the control parameter can appropriately be determined by considering also this point.

Fig. 11D is a view of an example of a screen indicating differences in productivity according to the control parameters for the plurality of paths. In a case in which a plurality of evaluation path IDs are selected, it is possible to view on one screen which control parameter (in the example of Fig. 11D, whether the standard parameter or the parameter α) achieves higher productivity, for example, the transport amount (T/L) of the load per one liter of the fuel, in each evaluation path ID. In the example of Fig. 11D, a bar chart represented as dotted lines indicate data relating to the standard parameter, and a bar chart represented as solid lines indicate data relating to the parameter α. The example of Fig. 11D indicates differences in productivity according to the control parameter for the four path IDs, and selecting the control parameter achieving high productivity on the path ID having a high travel frequency among these paths leads to improvement in productivity of the entire mine site S. Moreover, even in a case in which such selection is made, it is also possible to recognize how the productivity possibly changes for another path ID.

### - Effects -

As described above, in the present embodiment, the position data relating to the travel path is converted to the mesh set, and the mismatch degree between the mesh sets of the unclassified travel path and the classified travel path is evaluated. As a result, the computation required for the path classification is only the two pieces of computation of the mismatch degree, and the required parameters applied to the path classification are also only the threshold values S1 and S2 for evaluating the mesh size of the mesh and the mismatch degree. For the positioning error of the GNSS and the deviation of the travel path of the mine vehicle V, it is not required to set the point for the path determination and the distance threshold value for each point, and the adjustment of the mesh size can handle them. Further, as described above, the travel path relating to the "inclusion" and the "side trip" can be discriminated as a path different from the classified path. It is not required to set the point for the path determination for each path to be classified, and hence, even when the dumping place or the loading place is moved, work of setting again the point for the path determination and the distance threshold value according to this movement is not incurred. Thus, according to the present embodiment, the travel path of the mine vehicle V can accurately and easily be classified.

Moreover, the travel path can accurately be classified, so that the number of pieces of data for each path ID (the number of cycle IDs) can also accurately be totalized, and, further, the value of the productivity index can appropriately be evaluated. Moreover, the difference in the productivity according to the control parameter can be computed and displayed for each path ID, which can contribute to the setting of the control parameter for each path ID or appropriate determination of the user. On this occasion, the number of pieces of the data for each path ID can accurately be totalized, and hence, the productivity of the entire mine site S can easily be improved by identifying the path ID having an actually high travel frequency and selecting the control parameter such that the productivity is high on the travel path having the high travel frequency.

### [Second Embodiment]

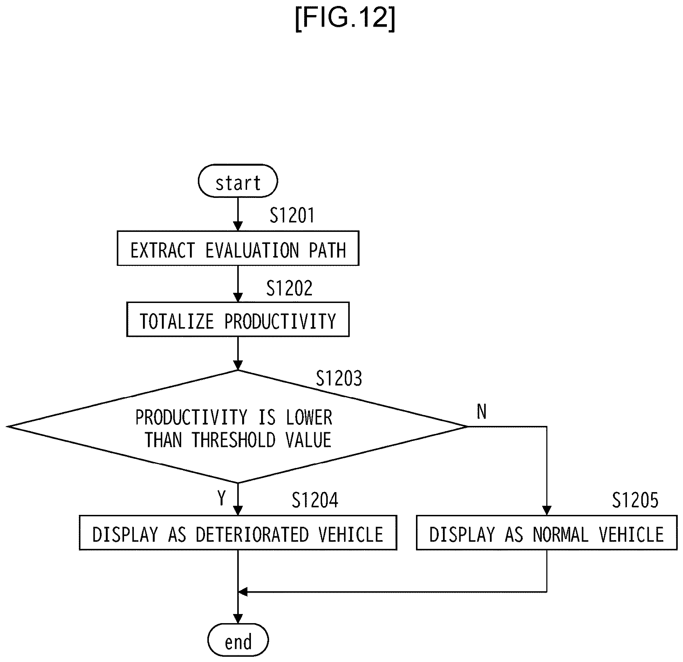

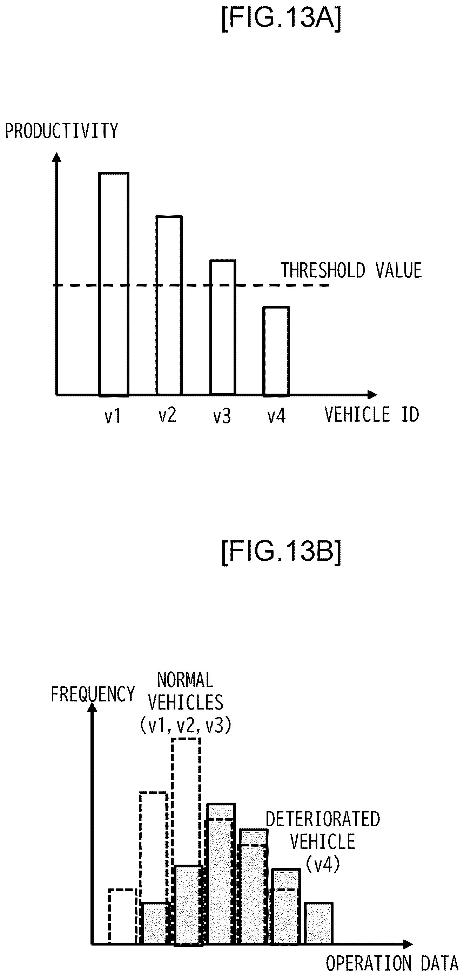

With reference to Fig. 12 and Fig. 13, a description is given of a second embodiment of the present invention.

A point in which the present embodiment is different from the first embodiment is analysis contents obtained after the path classification and the productivity is compared among the mine vehicles V traveling the same path. Specifically, the processing device 10 refers to the plurality of pieces of data relating to the travel paths having the same path ID in the storage device 20 (database 22), generates analysis data in which, regarding data relating to the productivity index computed on the basis of the operation data, comparison is made among vehicle IDs, and outputs the analysis data to the display terminal device 30. With this configuration, it is possible to execute extraction of a deteriorated vehicle, for example. The processing of the path classification is similar to that in the first embodiment, and hence, a description is omitted.

Fig. 12 is a flowchart for illustrating an example of a procedure of determining the deteriorated vehicle.

When receiving, from the display terminal device 30, a request signal corresponding to an operation performed by the user, for the comparison in the productivity according to the control parameters, the processing device 10 executes processing of the flowchart of Fig. 12.

### Step S1201

Step S1201 is processing similar to processing of Step S901 of Fig. 9. That is, when receiving the request signal from the display terminal device 30, the processing device 10 selects the evaluation paths in the evaluation period set by the user and transmits the evaluation paths to the display terminal device 30. For example, the processing device 10 computes the travel frequency of each path ID in the evaluation period, arranges the path IDs in the descending order of the travel frequency, and causes the display terminal device 30 to display, as the candidates of the evaluation path ID, these path IDs in a bar chart form together with the frequency threshold value. The display is not limited to the bar chart form and may be another display form. Moreover, the selected evaluation path may be displayed as a Pareto chart. The evaluation path IDs are displayed in such a manner that, for example, a route can be identified on a map of a region in which the mine vehicle operates (as an example, straight lines). Moreover, in a case in which a plurality of evaluation path IDs are displayed, routes may be indicated through use of a color such as red or blue or the thickness of a line such that a path having a high travel frequency and a path having a low travel frequency can be identified.

### Step S1202

When the (one or plurality of) evaluation path ID (IDs) is (are) selected from the displayed candidates and the productivity index is selected by the display terminal device 30, the processing device 10 computes the data relating to the selected productivity index for the evaluation path ID transmitted from the display terminal device 30 and for each vehicle ID which has traveled on this evaluation path ID. The value of the productivity index computed here may be a weighted average value corresponding to the travel frequency of the path ID as in a manner the same as that in the first embodiment. For example, by selecting the transport amount of the load (T/L) per one liter or the fuel consumption (L/km) of the fuel as the productivity index, it is possible to estimate the deterioration condition of the power train (the engine, a generator, an inverter, a motor, and the like) of the mine vehicle V. In a case in which a plurality (at least two or more) of the evaluation path IDs are selected, a comparison result thereof in terms of the productivity index may be displayed.

### Step S1203

When the value of the productivity index has been computed for the vehicle ID, the processing device 10 compares the data relating to the selected productivity index with the productivity threshold value for each vehicle ID and determines whether the productivity is higher than a productivity threshold value. Note that the productivity threshold value can be defined from a variance σ (for example, 2-3σ) of the computed values of productivity index of a plurality of vehicle IDs for a plurality of past periods.

### Step S1204

According to a result of the comparison with the productivity threshold value, the processing device 10 determines that the vehicle ID having the productivity lower than the productivity threshold value corresponds to a deteriorated vehicle, causes analysis data indicated in such a form that the value of the productivity index can be compared with that of another vehicle ID on the evaluation path ID to be displayed on the display terminal device 30, presents the analysis data to the user (for example, the equipment maintenance person P4), and ends the processing of the flowchart of Fig. 12. Upon the comparison of the analysis data relating to the deteriorated vehicle, the order of the display of the values of the productivity indices can freely be changed on the basis of the specified index among the plurality of indices included in the productivity indices.

### Step S1205

According to the result of the comparison with the productivity threshold value, the processing device 10 determines that the vehicle ID having the productivity equal to or higher than the productivity threshold value corresponds to a normal vehicle, causes analysis data indicated in such a form that the value of the productivity index can be compared with that of another vehicle ID on the evaluation path ID to be displayed on the display terminal device 30, presents the analysis data to the user (for example, the equipment maintenance person P4), and ends the processing of the flowchart of Fig. 12. Upon the comparison of the analysis data relating to the normal vehicle, the order of the display of the values of the productivity indices can freely be changed on the basis of the specified index among the plurality of indices included in the productivity indices.

In Fig. 13A and Fig. 13B, there are illustrated examples of screens of the analysis data relating to the deteriorated state of the vehicle caused to be displayed by the processing device 10 on the display terminal device 30.

Fig. 13A is a view for illustrating an example of a screen indicating the productivity for each vehicle ID which has traveled on the selected path ID. In the example of Fig. 13A, there is indicated a representative value (for example, the average value) of the productivity index of each vehicle ID for one evaluation path ID together with the productivity threshold value, and the vehicle IDs are displayed in a descending order of the productivity from the left. With this display, it is appreciated that the mine vehicles V having the vehicle IDs (v1 to v3) are normal vehicle having the productivity equal to or higher than the productivity threshold value, and the mine vehicle V having the vehicle ID (v4) is a deteriorated vehicle lower in productivity than the productivity threshold value.

Fig. 13B is a view for illustrating histograms of predetermined operation data in each cycle on the evaluation path. The predetermined operation data is, for example, operation data selected by the user on the display terminal device 30 in order to determine a cause of a decrease in productivity and is, for example, one or a plurality of items of the operation data such as the fuel consumption, the transport amount of the load, and a required time per one cycle of the evaluation path ID. In a case in which a plurality of pieces of operation data are selected, it is only required that a plurality of the displays of Fig. 13B are displayed side by side. In Fig. 13B, a histogram indicated as dotted lines is data relating to the normal vehicles (v1, v2, and v3), and a histogram indicated as solid lines is data relating to the deteriorated vehicle (v4). When it is assumed that Fig. 13B illustrates the fuel consumption per one cycle, it is appreciated that the deteriorated vehicle (v4) has a large amount of consumed fuel as a whole compared with the normal vehicles (v1, v2, and v3). In this case, for example, an abnormality of the power train of the deteriorated vehicle (v4) is suspected.

According to the present embodiment, the user (for example, the equipment maintenance person P4) can easily recognize the deteriorated vehicle decreased in productivity. Moreover, by separating the normal vehicles and the deteriorated vehicle from each other and compering the tendency of the operation data relating to the deteriorated vehicle with that relating to the normal vehicles, estimation of the cause for the decrease in productivity of the deteriorated vehicle is facilitated, and it is possible, for example, to increase efficiency of maintenance work for the deteriorated vehicle by the equipment maintenance person P4.

### [Third Embodiment]

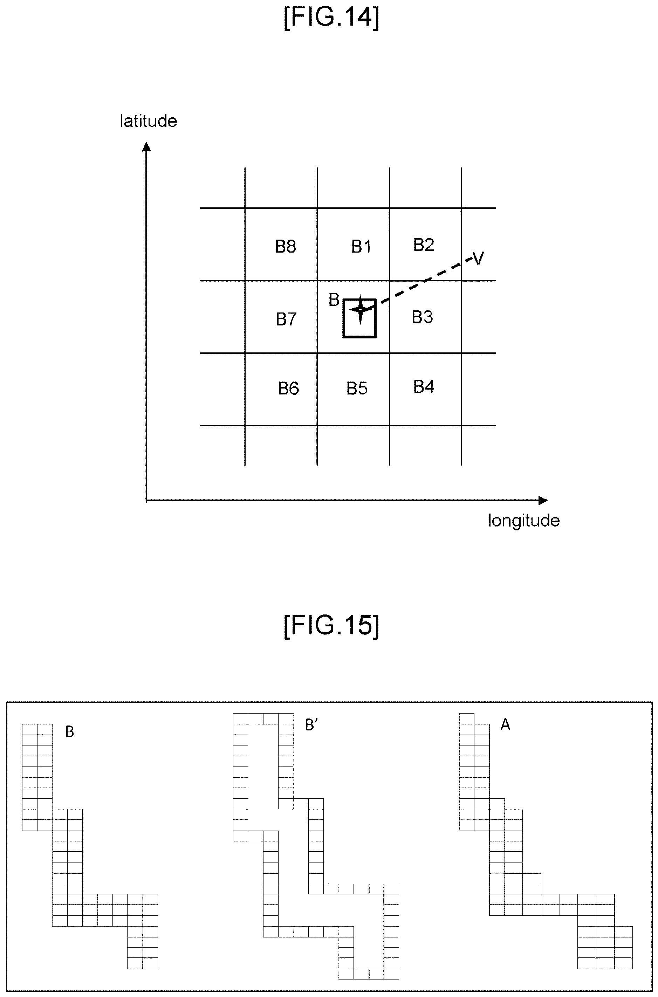

With reference to Fig. 14 to Fig. 16, a description is given of a third embodiment of the present invention. In the present embodiment, a description is given of a method of further increasing the accuracy of the path classification and suppression of the computation load.

Fig. 14 is a conceptual diagram for describing an omnidirectional mesh. In Fig. 14, a mesh set B of the classified travel path is represented as one mesh for the sake of simplicity. In the present embodiment, by adding, to the mesh set B of the classified travel path through which the mine vehicle V has passed, an omnidirectional mesh B' being a set of meshes (meshes B1 to B8 of Fig. 14) that are adjacent to the mesh set B and that surround the mesh set B on the vertical, horizontal, and diagonal sides, more robust path classification is achieved.

Fig. 15 is a schematic diagram for describing an example of the path classification through use of the omnidirectional mesh. As in the first embodiment and the second embodiment, B is the mesh set of the classified travel paths, and A is the cycle set. In the present embodiment, the omnidirectional mesh set B' of the mesh set B is newly recoded in the database 22 of the storage device 20. Moreover, upon the path classification processing, a ratio R2' (R2' = (Σ'-(B∪B')/Σ') of a difference set Δ2' (Δ2' = Σ'-(B∪B')) obtained by subtracting BUB' from a union set Σ' (= BUB'UA) of the mesh sets A and B and the omnidirectional mesh set B' is computed. The difference set Δ2' or the ratio R2' indicates a mismatch degree of the mesh set A of the unclassified travel path to the union set obtained by adding, to the mesh set B of the classified travel paths, the omnidirectional mesh set B' thereof. In the present embodiment, in place of Δ2 or R2 in the first and second embodiments, Δ2' or R2' is used, and it is determined whether or not Δ2' or R2' is lower than the threshold value S2.

As a result, determination of the travel path to be classified into the same path ID as another path is more effectively suppressed, an increase in number of path IDs more than necessity during the evaluation period is effectively suppressed, and the number of pieces of the data relating to the same path ID simultaneously increases. Thus, it is possible to determine the control parameter and the deteriorated vehicle on the basis of a larger number of pieces of the data.

### [Fourth Embodiment]

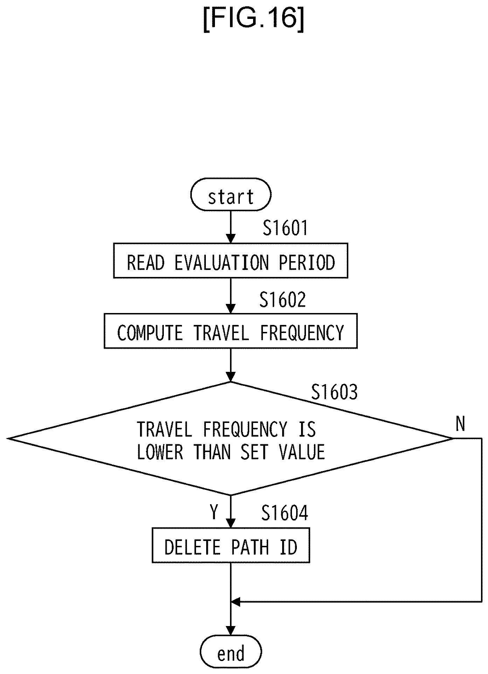

Fig. 16 is a flowchart for illustrating an example of a procedure of deleting a path ID having a low travel frequency by the processing device constituting the mine management system according to a fourth embodiment of the present invention. In the present embodiment, the processing device 10 deletes, from the storage device 20 (database 22), the data relating to the path ID having the number of pieces of data recorded in an evaluation period set in advance less than a set number set in advance. Except for this point, the other processing executed in the present embodiment is similar to that of any one of the first to third embodiments.

The processing device 10 executes the processing of Fig. 16, for example, when a set period set in advance has elapsed from previous execution of the processing of Fig. 16. Note that the processing of Fig. 16 may successively executed or may be executed in a case in which the number of path IDs of the classified travel paths reaches a set number.

### Step S1601

When the processing of Fig. 16 is started, the processing device 10 reads, from the storage device 20, an evaluation period (for example, past three months) determined in advance, in order to compute the travel frequency for each path ID.

### Step S1602

After reading the evaluation period, the processing device 10 computes the travel frequency on the basis of the number of cycle IDs accumulated in the evaluation period for each path ID.

### Step S1603

After computing the travel frequency for each path ID, the processing device 10 determines whether or not the travel frequency is lower than a set value (threshold value) set in advance. For the path ID having the travel frequency equal to or higher than the set value, the processing of Fig. 16 is here ended. For the path ID having the travel frequency lower than the set value, the processing device 10 causes the procedure to proceed to Step S1604.

### Step S1604

For the path ID having the travel frequency lower than the set value, the processing device 10 deletes the path ID from the storage device 20 (database 22) and ends the processing of Fig. 16. The deletion processing for the path ID is not limited to the deletion of the data, and may be, for example, adding, to the data relating to the path ID, an unavailability flag which defines such a state that the path ID cannot be used for the path classification. The path ID to which the unavailability flag is added is excluded from the available data at the execution time of the path classification processing (Fig. 6).

According to the present embodiment, the travel path having a low travel frequency is excluded from the classification candidates for the path classification processing, and hence, the computation load on the processing device 10 can be suppressed by an amount corresponding to the decrease in the travel paths used for the determination of the mismatch.

### Description of Reference Characters

1: Mine management system
10: Processing device
20: Storage device
30: Display terminal device
A, B: Mesh set
D: Dumping place (end point)
O: Dumping place (start point)
S1, S2: Threshold value
V: Mine vehicle
Δ1: First difference set
Δ2: Second difference set
Σ: Union set

## Claims

1. A mine management system comprising:
a processing device that has a function of generating, on a basis of position data and operation data relating to a mine vehicle, a mesh set indicated by IDs of meshes obtained by dividing a ground surface at equal intervals for a travel path having, as a start point, a place at which the mine vehicle dumps and, as an end point, a place at which the mine vehicle dumps next and classifying a path ID on a basis of the mesh set;
a storage device that stores and accumulates the mesh set and the operation data in association with each other for the travel path generated by the processing device; and
a display terminal device that transmits and receives data to and from the processing device and displays received data from the processing device,
wherein the processing device is configured to
compute, for a mesh set A of an unclassified travel path being a travel path that has not yet been classified and a mesh set B of a classified travel path being a travel path that has been classified, a union set being a logical sum of the mesh set A and the mesh set B, a first difference set being a logical difference between the union set and the mesh set A, and a second difference set being a logical difference between the union set and the mesh set B,
classify the unclassified travel path into a path ID of the classified travel path in a case in which a size of the first difference set and a size of the second difference set are both equal to or smaller than a threshold value set for each thereof and record, in the storage device, the path ID in association with the mesh set A relating to the unclassified travel path and the operation data, and
newly generate a new path ID in a case in which at least one of the size of the first difference set and the size of the second difference set is larger than the threshold value and record, in the storage device, the new path ID in association with the mesh set A relating to the unclassified travel path and the operation data.

2. The mine management system according to claim 1,
wherein the processing device is configured to determine the unclassified travel path by distinguishing it from the classified travel path, in a case in which the size of the second difference set is larger than the threshold value and the size of the first difference set is equal to or smaller than the threshold value.

3. The mine management system according to claim 1,
wherein the processing device is configured to determine the unclassified travel path by distinguishing it from the classified travel path, in a case in which the size of the first difference set is zero and the size of the second difference set is larger than the threshold value.

4. The mine management system according to claim 1,
wherein a control parameter applied to travel control for the mine vehicle is recorded for each of the travel paths in the storage device, and
the processing device is configured to refer to data relating to a plurality of travel paths having a same path ID in the storage device, totalize pieces of data relating to a productivity index computed on a basis of the operation data, to generate analysis data for the control parameter, and output the analysis data for the control parameter to the display terminal device.

5. The mine management system according to claim 4,
wherein the processing device is configured to perform weighted averaging on a totalized value of the productivity index according to number of pieces of data relating to the path ID to compute the analysis data.

6. The mine management system according to claim 1,
wherein the processing device is configured to refer to a plurality of pieces of data relating to travel paths having a same path ID in the storage device, generate analysis data in which, regarding data relating to a productivity index computed on a basis of the operation data, comparison is made among mine vehicles, and output the analysis data to the display terminal device.

7. The mine management system according to claim 6,
wherein the path ID is output in a display sequence based on a productivity index freely specified among productivity indices included in the analysis data.

8. The mine management system according to claim 1,
wherein the processing device is configured to delete, from the storage device, data relating to a path ID having number of pieces of data recorded in an evaluation period set in advance less than a set number set in advance.
